# EUROPÄISCHE PATENTSCHRIFT

(11) **EP 1 897 732 B1**
(45) Veröffentlichungstag und Bekanntmachung des Hinweises auf die Patenterteilung: **04.04.2012**
(21) Anmeldenummer: 07015421.6
(22) Anmeldetag: 07.08.2007
(51) Int. Cl.: B60J 7/14

(54) **Cabriolet**
Convertible
Cabriolet

(30) Priorität: 08.09.2006 DE 102006042201
(43) Veröffentlichungstag der Anmeldung: 12.03.2008
(73) Patentinhaber: Dr. Ing. h.c. F. Porsche AG, 70435 Stuttgart (DE)
(72) Erfinder: Beierl, Dominik, 70825 Korntal-Münchingen (DE); Ochs, Jürgen, 71297 Mönsheim (DE); Bosk, Christian, 75031 Eppingen-Mühlbach (DE); Erb, Thiemo Adolf, Dr., 70182 Stuttgart (DE); Francke, Gesine, 71297 Mönsheim (DE)

(56) Entgegenhaltungen:
- EP-A1- 1 308 333
- EP-A1- 1 424 235
- DE-A1- 10 339 275
- DE-U1- 20 111 650
- DE-U1- 29 911 610

## Beschreibung

Die vorliegende Erfindung betrifft ein Cabriolet mit einem zu öffnendem Verdeck, das in geschlossenem Zustand ein, einem Innenraum des Cabriolets zugewandten Himmel aufweist, gemäß dem Oberbegriff des Anspruchs 1. Ein solches Cabriolet ist aus der DE 103 39 275 A1 bekannt.

Ein gattungsgemäßes Cabriolet ist aus der DE 299 11 610 U1 bekannt, wobei das Cabriolet ein zumindest bereichsweise flexibles Verdeck und eine diesem zugeordnete Heckscheibe aufweist. Dabei ist zumindest ein an die Heckscheibe angrenzender Bereich des Verdecks mehrlagig ausgebildet und umfasst eine Lage, die einen dem Innenraum zugewandten Innenhimmel ausbildet. An seinem der Heckscheibe zugewandten Randbereich ist der Innenhimmel über eine lösbare, linienhafte Verbindung mit einem mit der Heckscheibe verbundenen Teil des Hecks verbunden. Hierdurch soll eine verbesserte Anbindung des Innenhimmels an den Randbereich der Heckscheibe verbessert werden.

Die vorliegende Erfindung beschäftigt sich mit dem Problem, für ein Cabriolet der eingangs genannten Art eine verbesserte oder zumindest eine andere Ausführungsform anzugeben, die insbesondere eine erhöhte Freiheit bei der Gestaltung eines Himmels eines Verdecks ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen, einem Innenraum eines Cabriolets zugewandten Himmel auf einer Innenseite des Verdecks segmentiert aus-zubilden und die einzelnen Segmente, die jeweils als Verkleidungselemente ausgebildet sind, jeweils einem begrenzten Dachabschnitt zuzuordnen. Dabei weist das Verdeck einen Heckscheibenrahmen und zumindest zwei, bei geschlossenem Verdeck in Fahrtrichtung vor dem Heckscheibenrahmen gelegene, separate Dachabschnitte auf, an welchem ein derartiges Verkleidungselement angeordnet ist. Da an jedem Dachabschnitt jeweils ein separates und selbsttragendes Verkleidungselement angeordnet ist, welches jeweils einen Teil des Himmels bildet, weist das jeweilige Verkleidungselement im wesentlichen die Größe und die Form des zugehörigen Dachabschnitts auf. Dabei liegt das jeweilige Verkleidungselement vorzugsweise flächig an dem zugeordneten Dachabschnitt an, so dass eine Kopffreiheit einer in dem Cabriolet sitzenden Person nahezu uneingeschränkt erhalten bleibt. Das erfindungsgemäße Cabriolet bietet somit ein Verdeck mit erhöhtem Komfort, insbesondere im Hinblick auf eine Bewegungsfreiheit im Innenraum des Cabriolets, aber auch gleichzeitig die Möglichkeit die einzelnen Verkleidungselemente nach freiwählbaren designerischen Gesichtspunkten zu gestalten. Gleichzeitig ist auch eine Vorfertigung der Verkleidungselemente vor dem Einbau bzw. Anbau in bzw. an dem Verdeck möglich, wodurch der Fertigungsprozess des Cabriolets gestrafft werden kann. Die beiden Verkleidungselemente zweier benachbarter Dachabschnitte verdecken eine zwischen den beiden benachbarten Dachabschnitten verlaufende Fuge und verhindern gleichzeitig eine Sicht auf die in der Fuge angeordnete Dichtung. Hierdurch wird ein nahezu durchgehender, d.h. ununterbrochener Himmel erzeugt, welcher einen besonders ästhetischen Eindruck hervorruft. Gleichzeitig wird auch die Betriebsicherheit des Verdecks erhöht, da die Fugen bei geschlossenem Verdeck geschlossen sind und dadurch keine Gegenstände bzw. Finger zwischen die einzelnen Dachabschnitte gelangen können. Nach der erfindungsgemäßen Lösung ist das Verdeck auf seiner dem Innenraum abgewandten Außenseite mit einem über den Heckscheibenrahmen und den zumindest zwei Dachabschnitten durchgehenden, flexiblen Überzug versehen. Dieser Überzug ist vorzugsweise wasserabweisend und bietet den Vorteil, dass er eine geschlossene Außenhaut, der das gesamte Verdeck überzieht, bildet. Im Unterschied zu bekannten faltbaren Schalendächern kann somit die Problematik von abzudichtenden Fugen zwischen den einzelnen Dachabschnitten wirksam vermieden werden, was zum einen den konstruktiven Aufbau des erfindungsgemäßen Verdecks vereinfacht und dadurch verbilligt und zum anderen einen zuverlässigen Schutz gegen äußere Witterungseinflüsse bietet.

Bei einer weiteren vorteilhaften Ausführungsform ist in einer Fuge zwischen zwei benachbarten Dachabschnitten und/oder zwischen dem Heckscheibenrahmen und dem benachbarten Dachabschnitt eine Akustikdichtung angeordnet. Eine derartige Akustikdichtung verringert ein Geräuschniveau innerhalb des Cabriolets, so dass auch bei höheren Geschwindigkeiten und gleichzeitig geschlossenem Verdeck nur eine geringe Lärmbelästigung von außen in den Innenraum des Cabriolets dringt. Insbesondere eine schalltechnische Abdichtung ist bei herkömmlichen Cabriolets bzw. herkömmlichen Verdecken oftmals schwierig bzw. nur unzureichend realisierbar, da insbesondere Stoffverdecke schalltechnisch nur sehr schwer abzudichten sind. Demgegenüber weist das erfindungsgemäße Verdeck mit dem Heckscheibenrahmen und den zumindest zwei separaten Dachabschnitten in geschlossenem Zustand einen deutlich verbesserten Schallschutz auf.

Bei einer vorteilhaften Weiterbildung der erfindungsgemäßen Lösung weist das jeweilige Verkleidungselement eine dem Innenraum zugewandte, selbstleuchtende oder beleuchtbare Oberfläche auf. Als selbstleuchtende Oberfläche kommen beispielsweise floureszierende Folien in Betracht, während für eine zu beleuchtende Oberfläche eine sogenannte IC-Folie verwendet werden kann, welche unter Anlegung einer elektrischen Spannung leuchtet. Wird nun diese dem Innenraum zugewandte, selbstleuchtende oder beleuchtbare Oberfläche zusätzlich mit einer zumindest bereichsweise lichtdurchlässigen Maske abgedeckt, so lassen sich unterschiedlichste Motive, wie beispielsweise ein Sternenhimmel lichttechnisch realisieren, wodurch ein besonderes Ambiente im Innenraum des Cabriolets erzeugt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch ein erfindungsgemäßes Cabriolet im Bereich seines Verdecks,
- Fig. 2: eine Ansicht von innen auf einen Himmel des Verdecks.

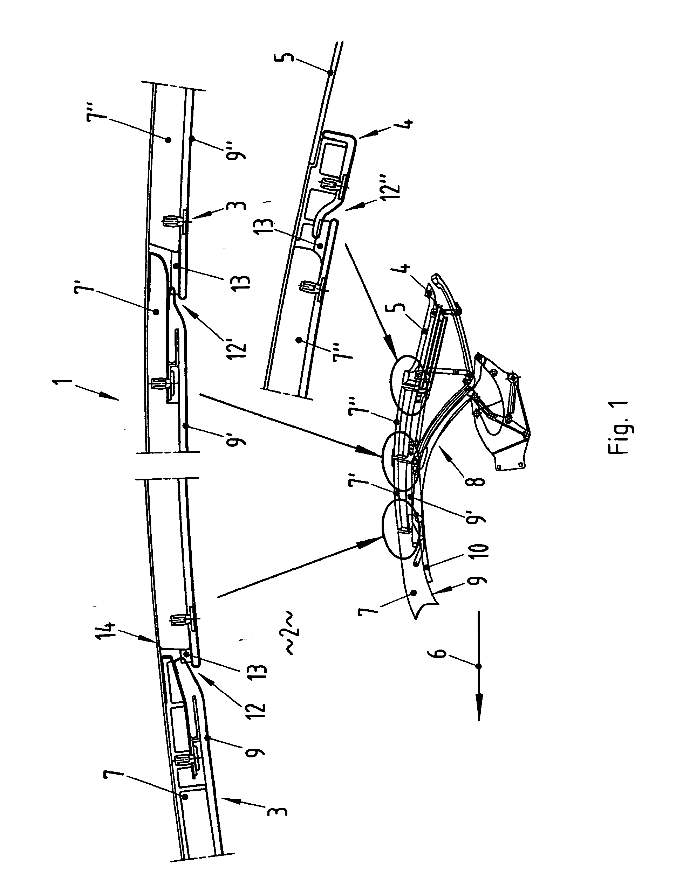

Entsprechend Fig. 1 weist ein zu öffnendes Verdeck 1 eines im übrigen nicht dargestellten Cabriolets in geschlossenem Zustand einen, einem Innenraum 2 des Cabriolets zugewandten Himmel 3 auf. Gebildet ist das Verdeck 1 aus einem Heckscheibenrahmen 4 mit einer daran angeordneten Heckscheibe 5 sowie zumindest zwei, bei geschlossenem Verdeck 1 in Fahrtrichtung 6 vor dem Heckscheibenrahmen 4 gelegenen, separaten Dachabschnitten 7, 7'. In dem in Fig. 1 gezeigten Ausführungsbeispiel weist das Verdeck 1 des Cabriolets in Fahrtrichtung 6 vor dem Heckscheibenrahmen 4 insgesamt drei separate Dachabschnitte 7, 7', 7" auf. Dabei ist der in Fahrtrichtung 6,gesehene vorderste Dachabschnitt 7 als Integraldachrahmen ausgebildet, während die nachfolgenden Dachabschnitte 7' und 7" als erster und zweiter Flächenspiegel ausgebildet sind.

Die Dachabschnitte 7, 7', 7" können über ein Verdeckgestänge 8 zum Öffnen und Schließen des Verdecks 1 gegeneinander und relativ zum Cabriolet bewegt werden. Dabei befindet sich der zweite Flächenspiegel 7" bei geöffnetem Verdeck 1 unterhalb des Heckscheibenrahmens 4, während der Integraldachrahmen 7 und der erste Flächenspiegel 7' oberhalb des Heckscheibenrahmens 4 abgelegt sind.

Sämtliche Dachabschnitte 7, 7', 7" sowie der Heckscheibenrahmen 4 sind als separate Elemente ausgebildet und weisen eine gewisse Eigenstabilität auf. Die Dachabschnitte 7, 7', 7" und/oder der Heckscheibenrahmen 4 können aus Leichtmetall-, Kunststoff- oder PU-Papierwaben gebildet sein, was für die erforderliche Steifigkeit der Dachabschnitte 7, 7', 7" und/oder des Heckscheibenrahmens 4 sorgt. Wichtig ist hierbei, dass die Dachabschnitte 7, 7', 7" und/oder der Heckscheibenrahmen 4 einerseits möglichst leicht ausgebildet sind, um insbesondere einen Stellantrieb zum Öffnen und Schließen des Verdecks 1 klein halten zu können, andererseits aber eine erforderliche Mindeststeifigkeit aufweisen, um einen hohen Fahrkomfort zu bieten.

Erfindungsgemäß ist an jedem Dachabschnitt 7, 7', 7" ein, dem Innenraum 2 des Cabriolets zugewandtes, separates und selbsttragendes Verkleidungselement 9, 9', 9" angeordnet, welches jeweils einen Teil des Himmels 3 bildet. Ein derartiges selbsttragendes Verkleidungselement 9, 9', 9" kann beispielsweise über eine Schraub- oder Clipsverbindung mit dem zugehörigen Dachabschnitt 7, 7', 7" verbunden werden. Da der Himmel 3 für im Innenraum 2 sitzende Fahrgäste des Cabriolets unmittelbar sichtbar ist, ist dessen designerische Ausgestaltung vor allem bei höherpreisigen Cabriolets von besonderer Bedeutung. Die erfindungsgemäße, selbsttragenden Verkleidungselemente 9, 9', 9" weisen daher eine dem Innenraum 2 zugewandte Oberfläche 10, 10', 10" auf, welche beispielsweise aus einem der folgenden Materialien gebildet sein kann oder welche zumindest eines der folgenden Materialien aufweisen: Leder, Kunststoff, Holz, Metall, Stoff. Diese Aufzählung zeigt bereits, dass sich mit den erfindungsgemäßen Verkleidungselementen 9, 9', 9" eine große Freiheit hinsichtlich der Gestaltung des Himmels 3 ergibt, wobei darüber hinaus denkbar ist, dass zumindest eine Oberfläche 10 zumindest eines Verkleidungselements 9 in der Wagenfarbe des Cabriolets gehalten ist.

Ebenfalls ist denkbar, dass das jeweilige Verkleidungselement 9, 9', 9" eine dem Innenraum 2 zugewandte selbstleuchtende oder beleuchtbare Oberfläche 10, 10', 10" aufweist. Als selbstleuchtende Oberfläche kommt hierbei beispielsweise eine flureszierende Folie bzw. Schicht in Betracht, während als beleuchtbare Oberfläche eine sogenannte IC-Folie verwendet werden kann, welche beim Anlegen von elektrischer Spannung leuchtet. Dabei kann die selbstleuchtende bzw. beleuchtbare Oberfläche 10, 10', 10" über nahezu die gesamte, dem Innenraum 2 zugewandte Fläche des jeweiligen Dachabschnitts 9, 9', 9" ausgedehnt sein oder aber die dem Innenraum 2 zugewandte selbstleuchtende oder beleuchtbare Oberfläche 10, 10', 10" ist zumindest in einem Teilbereich von einer zumindest bereichsweise lichtdurchlässigen Maske 11 abgedeckt, wodurch ein individuelles Beleuchtungsmuster erzeugt werden kann. Eine derartige Maske 11 kann beispielsweise in der Form einer perforierten Folie gestaltet sein, welche die selbstleuchtende bzw. beleuchtbare Oberfläche 10, 10', 10" derart abdeckt, dass der Eindruck eines Sternenhimmels entsteht.

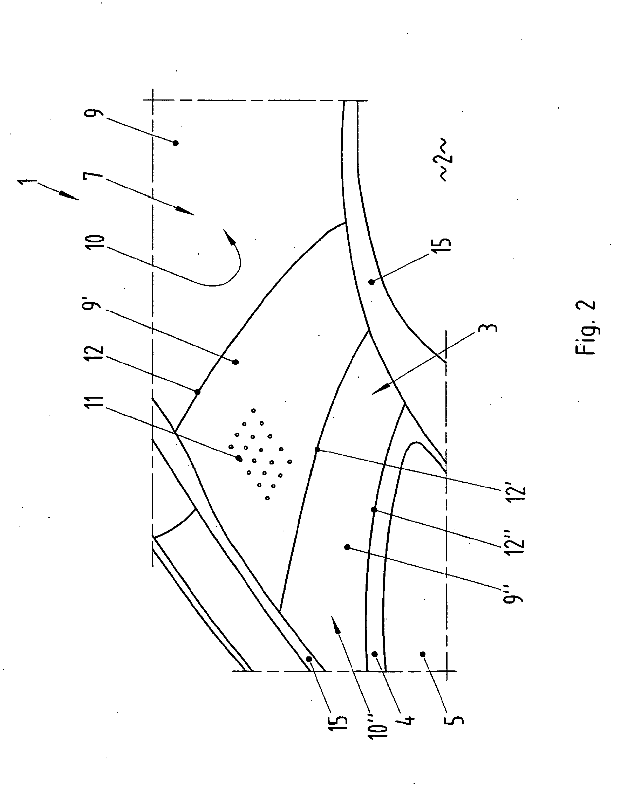

Zwischen den einzelnen Dachabschnitten 7, 7', 7" und/oder dem Heckscheibenrahmen 4 ist, wie aus Fig. 2 zu entnehmen ist, jeweils eine Fuge 12, 12', 12" angeordnet, wobei in den jeweiligen Fugen 12, 12', 12" jeweils eine Dichtung 13, 13', 13" vorgesehen ist, die insbesondere als Akustikdichtung ausgebildet ist. Eine derartige Akustikdichtung kann beispielsweise in der Form eines, in einen Schlauch eingenähten Mikrofaser-Vlieses realisiert sein. Hierbei kommt den Dichtungen 13, 13', 13" überwiegend die Aufgabe der schalltechnischen Abdichtung zu, da eine Abdichtung gegen äußere Witterungseinflüsse, wie beispielsweise Regen oder Wind, bereits von einem flexiblen Überzug 14 übernommen wird, der die dem Innenraum 2 abgewandte Außenseite des Heckscheibenrahmens 4 und der Dachabschnitte 7, 7', 7" durchgehend überzieht. Der Überzug 14 ist dabei vorzugsweise hydrophob ausgebildet und derart mit den einzelnen Dachabschnitten 7, 7' bzw. mit dem Heckscheibenrahmen 4 verbunden, das eine Öffnungsbewegung des Verdecks 1 nicht behindert wird. Insbesondere ist dabei der Überzug 14 nicht mit dem Dachabschnitt 7" verbunden, da dieser beim Öffnen des Verdecks 1, wie eingangs erwähnt, unter dem Heckscheibenrahmen 4 abgelegt wird. Durch den Überzug 14 ist somit das erfindungsgemäße Verdeck 1 ausdrücklich nicht in der Art eines Hard-Tops ausgestaltet.

Das im Bereich der Dachabschnitte 7, 7', 7" vorzugsweise flächig anliegende, zugehörige Verkleidungselement 9, 9', 9" ist im Bereich des Heckscheibenrahmens 4 als ein selbsttragendes und ein die Heckscheibe 5 umrahmendes Verkleidungselement 9'" ausgebildet, welches im Bereich des Heckscheibenrahmens 4 einen Teil des Himmels 3 bildet.

Die Bauweise des Verdecks 1 bedingt, dass wie oben erwähnt, zwischen den einzelnen Dachabschnitten 7, 7', 7" und zwischen dem Dachabschnitt 7" und dem Heckscheibenrahmen 4 Fugen 12, 12', 12" verlaufen, welche unter Umständen eine optischen Gesamteindruck des Himmels 3 beeinträchtigen können. Aus diesem Grunde sind die Verkleidungselemente 9, 9', 9", 9"' so ausgebildet, dass jeweils zwei Verkleidungselemente, beispielsweise 9, 9', zweier benachbarter Dachabschnitte 7, 7' die zwischen den beiden benachbarten Dachabschnitten 7, 7' verlaufende Fuge 12 verdecken und insbesondere eine Sicht auf die in der Fuge 12 angeordnete Dichtung 13 verhindern. Dies kann beispielsweise durch eine überlappende Ausbildung der Verkleidungselemente 9 bis 9"' im Bereich der jeweiligen Fuge 12 erfolgen. Verschiedene Uberlappungsvarianten sind dabei gemäß der Fig. 1 dargestellt. Außerdem sei noch erwähnt, dass dem Himmel 3 seitliche, das Verdeckgestänge 8 abdeckende Streifen 15 aus einem elastisch dehnbaren Material, wie beispielsweise Stoff, zugeordnet sein können, die einschließlich vom Dachabschnitt 7 bis über den Heckscheibenrahmen 4 verlaufen können.

### Bezugszeichenliste

- 1: Verdeck
- 2: Innenraum
- 3: Himmel
- 4: Heckscheibenrahmen
- 5: Heckscheibe
- 6: Fahrtrichtung
- 7: Dachabschnitt
- 7': erster Flächenspiegel
- 7": zweiter Flächenspiegel
- 8: Verdeckgestänge
- 9: Verkleidungselement
- 10: Oberfläche
- 11: Maske
- 12: Fuge
- 13: Dichtung
- 14: Überzug

## Patentansprüche

1. Cabriolet mit einem zu öffnenden Verdeck (1), das in geschlossenem Zustand einen, einem Innenraum (2) des Cabriolets zugewandten Himmel (3) aufweist, wobei
- das Verdeck (1) einen Heckscheibenrahmen (4) und zumindest zwei, bei geschlossenem Verdeck (1) in Fahrtrichtung (6) vor dem Heckscheibenrahmen (4) gelegene, separate Dachabschnitte (7, 7') aufweist, welche über ein Verdeckgestänge (8) beim Öffnen und Schließen des Verdecks (1) gegeneinander und relativ zum Cabriolet bewegt werden können,
- an jedem Dachabschnitt (7, 7') jeweils ein, dem Innenraum (2) des Cabriolets zugewandtes, separates und selbsttragendes Verkleidungselement (9, 9') angeordnet ist, welches jeweils einen Teil des Himmels (3) bildet, und
- in einer Fuge (12) zwischen zwei benachbarten Dachabschnitten (7, 7') und/oder zwischen einem Dachabschnitt (7") und dem Heckscheibenrahmen (4) jeweils eine Dichtung (13, 13', 13") angeordnet ist, **dadurch gekennzeichnet, dass** zwei Verkleidungselemente (9, 9', 9") zweier benachbarter Dachabschnitte (7, 7', 7") die zwischen den zwei benachbarten Dachabschnitten (7, 7', 7") verlaufende Fuge (12, 12') verdecken und eine Sicht auf die Dichtung (13, 13') verhindern, und dass das Verdeck (1) auf seiner dem Innenraum (2) abgewandten Außenseite mit einem über den Heckscheibenrahmen (4) und die zumindest zwei Dachabschnitte (7, 7') durchgehenden, flexiblen Überzug (14) versehen ist.

2. Cabriolet nach Anspruch 1, **dadurch gekennzeichnet,**
- **dass** die Dichtung (13, 13', 13") als Akustikdichtung ausgebildet ist, und/oder
- **dass** die Dichtung (13, 13', 13") ein, in einen Schlauch eingenähtes Mikrofaser-Vlies aufweist.

3. Cabriolet nach einem der Ansprüche 1 oder 2, **dadurch gekennzeichnet,**
- **dass** das jeweilige Verkleidungselement (9, 9', 9",9"') eine dem Innenraum (2) zugewandte Oberfläche (10, 10', 10",10"') aus Leder und/oder Kunststoff und/oder Holz und/oder Metall und/oder Stoff aufweist, und/oder
- **dass** eine dem Innenraum (2) zugewandte Oberfläche (10, 10', 10", 10"') des jeweiligen Verkleidungselements (9, 9', 9", 9"') in der Wagenfarbe des Cabriolets gehalten ist.

4. Cabriolet nach einem der Ansprüche 1 bis 3, **dadurch gekennzeichnet, dass** das jeweilige Verkleidungselement (9, 9', 9") eine dem Innenraum (2) zugewandte selbstleuchtende oder beleuchtbare Oberfläche (10, 10', 10") aufweist.

5. Cabriolet nach Anspruch 4, **dadurch gekennzeichnet, dass** die dem Innenraum (2) zugewandte selbstleuchtende oder beleuchtbare Oberfläche (10, 10', 10") mit einer zumindest bereichsweise lichtdurchlässigen Maske (11) abgedeckt ist.

6. Cabriolet nach einem der Ansprüche 1 bis 5, **dadurch gekennzeichnet, dass** das Verdeck (1) des Cabriolets den Heckscheibenrahmen (4) und drei, bei geschlossenem Verdeck (1) in Fahrtrichtung (6) vor dem Heckscheibenrahmen (4) gelegene, separate Dachabschnitte (7, 7', 7") aufweist.

7. Cabriolet nach einem der Ansprüche 1 bis 6, **dadurch gekennzeichnet, dass** am Heckscheibenrahmen (4) ein, dem Innenraum (2) des Cabriolets zugewandtes, selbsttragendes und ein die Heckscheibe (5) umrahmendes Verkleidungselement (9"') angeordnet ist, welches einen Teil des Himmels (3) bildet.

## Claims

1. Convertible with a top (1) which can be opened and, in the closed state, has a headlining (3) facing an interior (2) of the convertible, wherein
- the top (1) has a rear window frame (4) and at least two separate roof sections (7, 7') which, when the top (1) is closed, are placed in front of the rear window frame (4) in the direction of travel (6) and, during the opening and closing of the top (1), can be moved in relation to each other and relative to the convertible via a top linkage (8),
- a respective, separate and self-supporting lining element (9, 9') which faces the interior (2) of the convertible and which each forms part of the headlining (3) is arranged on each roof section (7, 7'), and
- a seal (13, 13', 13") is arranged in each case in a joint (12) between two adjacent roof sections (7, 7') and/or between a roof section (7") and the rear window frame (4), **characterized in that** two lining elements (9, 9', 9") of two adjacent roof sections (7, 7', 7") cover the joint (12, 12') running between the two adjacent roof sections (7, 7', 7") and prevent a view of the seal (13, 13'), and **in that** the outside of the top (1), which faces away from the interior (2), is provided with a flexible covering (14) which is continuous over the rear window frame (4) and the at least two roof sections (7, 7').

2. Convertible according to Claim 1, **characterized**
- **in that** the seal (13, 13', 13") is designed as an acoustic seal, and/or
- **in that** the seal (13, 13', 13") has a microfiber fleece sewn into a tube.

3. Convertible according to either of Claims 1 and 2, **characterized**
- **in that** the respective lining element (9, 9', 9", 9"') has a surface (10, 10', 10", 10"') made of leather and/or plastic and/or wood and/or metal and/or fabric facing the interior (2), and/or
- **in that** a surface (10, 10', 10", 10"') of the respective lining element (9, 9', 9", 9"'), which surface faces the interior (2) is kept in the color of the convertible.

4. Convertible according to one of Claims 1 to 3, **characterized in that** the respective lining element (9, 9', 9") has a self-illuminating or illuminable surface (10, 10', 10") facing the interior (2).

5. Convertible according to Claim 4, **characterized in that** the self-illuminating or illuminable surface (10, 10', 10") which faces the interior (2) is covered with a mask (11) which is light-permeable at least in some regions.

6. Convertible according to one of Claims 1 to 5, **characterized in that** the top (1) of the convertible has the rear window frame (4) and three separate roof sections (7, 7', 7") which, when the top (1) is closed, are placed in front of the rear window frame (4) in the direction of travel (6).

7. Convertible according to one of Claims 1 to 6, **characterized in that** a self-supporting lining element (9"') which faces the interior (2) of the convertible, frames the rear window (5) and forms part of the headlining (3) is arranged on the rear window frame (4).

## Revendications

1. Cabriolet comprenant une capote ouvrante (1) qui, dans l'état fermé, comprend un plafond (3) faisant face à un habitacle (2) du cabriolet,
- la capote (1) comprenant un cadre de vitre arrière (4) ainsi qu'au moins deux portions de toit (7, 7') séparées qui sont placées avant le cadre de vitre arrière (4) dans la direction de conduite (6) lorsque la capote (1) est fermée, et qui peuvent être déplacées les unes par rapport aux autres et par rapport au cabriolet au moyen d'une tringlerie de capote (8) lors de l'ouverture et de la fermeture de la capote (1),
- un élément d'habillage (9, 9') séparé et autoporteur respectif, faisant face à l'habitacle (2) du cabriolet, étant disposé sur chaque portion de toit (7, 7'), lequel élément d'habillage formant respectivement une partie du plafond (3), et
- une garniture d'étanchéité (13, 13', 13") respective étant disposée dans un joint (12) entre deux portions de toit (7, 7') adjacentes et/ou entre une portion de toit (7") et le cadre de vitre arrière (4), **caractérisé en ce que** deux éléments d'habillage (9, 9', 9") de deux portions de toit adjacentes (7, 7', 7") masquent le joint (12, 12') s'étendant entre les deux portions de toit (7, 7', 7") adjacentes et dissimulent la garniture d'étanchéité (13, 13'), et **en ce que** la capote (1) est pourvue, sur son côté extérieur opposé à l'habitacle (2), d'un revêtement (14) flexible continu au-dessus du cadre de vitre arrière (4) et des au moins deux portions de toit (7, 7').

2. Cabriolet selon la revendication 1, **caractérisé**
- **en ce que** la garniture d'étanchéité (13, 13', 13") est réalisée en tant que garniture d'étanchéité acoustique, et/ou
- **en ce que** la garniture d'étanchéité (13, 13', 13") comprend un non-tissé en microfibres cousu dans un tube.

3. Cabriolet selon la revendication 1 ou 2, **caractérisé**
- **en ce que** l'élément d'habillage (9, 9', 9", 9"') respectif comprend une surface (10, 10', 10" , 10"') en cuir et/ou plastique et/ou bois et/ou métal et/ou étoffe qui fait face à l'habitacle (2), et/ou
- **en ce qu'**une surface (10, 10' , 10", 10"') , qui fait face à l'habitacle (2), de l'élément d'habillage (9, 9', 9", 9"') respectif est de la même couleur que celle du cabriolet.

4. Cabriolet selon l'une quelconque des revendications 1 à 3, **caractérisé en ce que** l'élément d'habillage (9, 9', 9", 9"') respectif comprend une surface (10, 10', 10") qui fait face à l'habitacle (2) et qui est autolumineuse ou éclairable.

5. Cabriolet selon la revendication 4, **caractérisé en ce que** la surface (10, 10', 10") qui fait face à l'habitacle (2) et qui est autolumineuse ou éclairable est recouverte d'un masque (11) qui est transparent au moins par endroits.

6. Cabriolet selon l'une quelconque des revendications 1 à 5, **caractérisé en ce que** la capote (1) du cabriolet comprend le cadre de vitre arrière (4) et trois portions de toit (7, 7', 7") séparées placées avant le cadre de vitre arrière (4) dans la direction de conduite (6) lorsque la capote (1) est fermée.

7. Cabriolet selon l'une quelconque des revendications 1 à 6, **caractérisé en ce qu'**un élément d'habillage (9"'), qui encadre la vitre arrière (5), est autoporteur et fait face à l'habitacle (2) du cabriolet, est disposé sur le cadre de vitre arrière (4), lequel élément d'habillage forme une partie du plafond (3).
